# EUROPEAN PATENT APPLICATION

(11) **EP 4 546 001 A1**
(43) Date of publication of application: **30.04.2025**
(21) Application number: 24207309.6
(22) Date of filing: 17.10.2024
(51) Int. Cl.: G01S 5/02, H04L 9/00, H04L 9/40, G01S 5/10, G01S 1/24

(54) **METHOD AND DEVICE FOR RECOVERING RECEPTION IN REAL-TIME LOCATION SYSTEMS**

(30) Priority: 24.10.2023 US 202363592784 P; 30.04.2024 US 202463640634 P
(71) Applicant: QORVO US, INC., Greensboro, NC 27409 (US)
(72) Inventor: IVANOV, Alexander, Greensboro, 27409 (US); HAWAWINI, Shadi, Greensboro, 27409 (US)
(74) Representative: D Young & Co LLP

(57) **Abstract**

Methods and devices for recovering reception in untracked positioning. A method includes: receiving a first encrypted message from a second device; decrypting the first encrypted message based on a first index yielding a first decrypted message; determining that the first decrypted message was decrypted unsuccessfully; updating the first index to a second index; decrypting the first encrypted message based on the second index yielding a second decrypted message, wherein second decrypted message includes first data; determining that the second decrypted message was decrypted successfully; and updating the second index to a third index.

## Description

### FIELD

The present disclosure relates to ultra-wideband-enabled devices, systems, and methods for untracked navigation using ultra-wideband device. In particular, to reception recovery in real-time location systems.

### BACKGROUND

A real-time location system (RTLS) is a technology that tracks and manages the location of people and objects in real time, often within a building or other contained area. A RTLS often includes multiple anchor devices and one or more tag devices capable of transmitting and receiving messages between themselves. The anchors are deployed at fixed locations, serving as fixed reference points, and are time synchronized. The anchors may periodically transmit wireless signals that can be received by other anchors and a tag. Wireless tags, such as mobile phones, are often attached to objects or worn by people, and are capable of receiving wireless signals transmitted by anchors. The location of a tag can be determined based on the communication between the tag and anchors using known techniques, e.g., multilateration. In an existing RTLS, failure of the tag to receive an initial message from an anchor occurs with relatively high probability. When an initial message is not received, the tag is not able to decrypt subsequent reply messages from other anchors. This may be true even when the tag hardware physically receives subsequent reply messages without significant error. Current methods to recover from the failure to receive an initial message require waiting for the next initial message at the start of a new round of messaging, resulting in a poor reception rate.

### SUMMARY

Particular aspects are set out in the appended independent claims. Various optional embodiments are set out in the dependent claims.

Various approaches described herein may provide methods of recovering reception.

In one general aspect, the present disclosure is directed to a method for recovering reception during a ranging round. The method also includes receiving, at a first device, a first encrypted message from a second device. The method also includes decrypting, at the first device, the first encrypted message based on a first index yielding a first decrypted message. The method also includes determining, at the first device, that the first decrypted message was decrypted unsuccessfully. The method also includes updating, at the first device, the first index to a second index. The method also includes decrypting, at the first device, the first encrypted message based on the second index yielding a second decrypted message, where second decrypted message includes first data. The method also includes determining, at the first device, that the second decrypted message was decrypted successfully. The method also includes updating, at the first device, the second index to a third index.

In some aspects, implementations may include one or more of the following features. The method may include: receiving, at the first device after the first encrypted message, a second encrypted message from a third device; and decrypting, at the first device, the second encrypted message based on the third index yielding a third decrypted message, where the third decrypted message includes second data. The first data that may include a first time of transmission of the first encrypted message from the second device and one or more coordinates representing a location of the second device, and where the second data that may include a second time of transmission of the second encrypted message from the third device and one or more coordinates representing a location of the third device. The method the method may include: determining, at the first device, a location of the first device based on the first data and second data. The first index and second index are associated with a first ranging slot and a second ranging slot, where the first ranging slot precedes the second ranging slot in the ranging round. The first encrypted message is an ultra-wideband (UWB) message, where the first device is a UWB-enabled tag device, where the first index, second index, and third index are different values of a cryptoStsIndex, and where the second device is an UWB-enabled anchor device. The steps of the method occur within 100 microseconds.

In one general aspect, the present disclosure is directed to a machine-readable medium comprising (e.g. storing and/or conveying) instructions. The machine-readable medium comprising instructions also includes receiving a first encrypted message from a device. The machine-readable medium comprising instructions also includes decrypting the first encrypted message based on a first index yielding a first decrypted message. The machine-readable medium comprising instructions also includes determining that the first decrypted message was decrypted unsuccessfully. The machine-readable medium comprising instructions also includes updating the first index to a second index. The machine-readable medium comprising instructions also includes decrypting the first encrypted message based on the second index yielding a second decrypted message, where second decrypted message includes first data. The machine-readable medium comprising instructions also includes determining that the second decrypted message was decrypted successfully. The machine-readable medium comprising instructions also includes updating the second index to a third index.

In some aspects, implementations may include one or more of the following features. The machine-readable medium further comprising instructions that, when executed by the one or more processors, cause the one or more processors to perform: receiving, after the first encrypted message, a second encrypted message from a second device; and decrypting the second encrypted message based on the third index yielding a third decrypted message, where the third decrypted message includes second data. The first data may include a first time of transmission of the first encrypted message from the device and one or more coordinates representing a location of the device, and where the second data may include a second time of transmission of the second encrypted message from the second device and one or more coordinates representing a location of the second device. The machine-readable medium further comprising instructions that, when executed by the one or more processors, cause the one or more processors to perform: determining a location of a third device based on the first data and second data. The first index and second index are associated with a first ranging slot and a second ranging slot, where the first ranging slot precedes the second ranging slot in the ranging round. The first encrypted message is an ultra-wideband (UWB) message, where a third device may include the machine-readable medium is a UWB-enabled tag device, where the first index, second index, and third index are different values of a cryptoStsIndex, and where the device is a UWB-enabled anchor device. The one or more processors are configured to execute the instructions within 100 microseconds.

In one general aspect, the present disclosure is directed to a device. The device also includes a transceiver; a memory storing instructions; and one or more hardware processors configured to execute the instructions to cause the device to perform operations that may include: receiving a first encrypted message from a second device; decrypting the first encrypted message based on a first index yielding a first decrypted message; determining that the first decrypted message was decrypted unsuccessfully; updating the first index to a second index; decrypting the first encrypted message based on the second index yielding a second decrypted message, where second decrypted message includes first data; determining that the second decrypted message was decrypted successfully; and updating the second index to a third index.

In some aspects, implementations may include one or more of the following features. The device where the one or more hardware processors are configured to execute the instructions to cause the device to perform operations may include: receiving, after the first encrypted message, a second encrypted message from a third device; and decrypting the second encrypted message based on the third index yielding a third decrypted message, where the third decrypted message includes second data. The first data that may include a first time of transmission of the first encrypted message from the device and one or more coordinates representing a location of the second device, and where the second data that may include a second time of transmission of the second encrypted message from the third device and one or more coordinates representing a location of the third device. The one or more hardware processors are configured to execute the instructions to cause the device to perform operations may include: determining a location of the device based on the first data and second data. The first index and second index are associated with a first ranging slot and a second ranging slot, where the first ranging slot precedes the second ranging slot in the ranging round.

Those skilled in the art will appreciate the scope of the present disclosure and realize additional aspects thereof after reading the following detailed description in association with the accompanying drawing figures.

### BRIEF DESCRIPTION OF THE DRAWINGS

The accompanying drawing figures incorporated in and forming a part of this specification illustrate several aspects of the disclosure, and together with the description, serve to explain the principles of the disclosure.
FIG. 1 illustrates an example real time location system (RTLS) system.
FIG. 2 a signaling diagram depicting a failure scenario in FiRa DL-TDoA, according to some aspects of the present disclosure.
FIG. 3 depicts a simplified block diagram of a reception recovery method, according to some aspects of the present disclosure.
FIG. 4 illustrates a signaling diagram depicting reception recovery in FiRa DL-TDoA, according to some aspects of the present disclosure.
FIG. 5 is a simplified diagram of a communication device, accord to some aspects of the present disclosure.
FIG. 6 illustrates an example method for recovering reception by a UWB-enabled device, according to aspects of the present disclosure.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular aspects only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

Hereinafter, aspects are described in detail with reference to the accompanying drawings. Further, although a communication system using ultra-wideband (UWB) is described in connection with aspects, as an example, the aspects may also apply to other communication systems with similar technical background or features. For example, a communication system using Bluetooth or ZigBee may be included therein. Further, aspects of the present disclosure may be modified in such a range as not to significantly depart from the scope of the present disclosure under the determination by one of ordinary skill in the art and such modifications may be applicable to other communication systems.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known, also referred to as anchor devices). The present disclosure assumes that a referenced device is capable of communicating through UWB (referred to as "UWB-enabled user device," UWB device, user device, or simply device).

In this disclosure, the terms "initiator" and "responder" may take their definitions from the FiRa specification but are not limited to the protocols described in the FiRa specification. In some instances, the choice of initiator and responder will be negotiated over Bluetooth or other communication means before a ranging round or session begins. One skilled in the art will appreciate the applicability of the descriptions herein using these, and other, terms to other protocols based on ranging. In some instances, the responder may also be referred to as an access system.

As used herein, a "slot," a "ranging round," and a "block" each refers to a time or span of time. A ranging round may include a plurality of slots, also called ranging slots, and a block may include one or more ranging rounds.

The following abbreviations may be used throughout: "CCC" for Car Connectivity Consortium, "BLE" for Bluetooth Low Energy, "DM" for Data Message, "SS-TWR" for Single-Sided Two-Way Ranging, "DS-TWR" for Double-Sided Two-Way Ranging, "RIM" for Ranging Initiation Message, "RRM" for Ranging Response Message, "RRRM" for Ranging Result Report Message, "RFM" for Ranging Final Message, "CRUM T2" for Control Ranging Update Message Type 2, "RCM T3" for Ranging Control Message Type 3, "SIM" for Scheduling Information Message, "FP" for First Path, "CAP" for Contention-Access Period, and "CFP" for Contention-Free Period. "RR" for Ranging Response, "DL-TDoA" for Downlink Time Difference of Arrival, "OWR" for One-way Ranging.

The FiRa standard has an untracked navigation application which is facilitated by the FiRa downlink (DL) TDoA or DT scheme. The implementation of the DL-TDoA in FiRa-2.0 is a variant of a non-deferred TWR with a "Static STS" rotation mechanism. The DL-TDoA scheme hardware includes a cluster of infrastructure elements (DT-Anchors or, simply, anchors), and mobile devices (DT-Tags or tag devices). DT-anchors are installed, e.g., often with unchanged locations, on the walls or ceiling, and periodically transmit UWB signals per rules defined in the FiRa DL-TDoA protocol. In some instances, a polling message, also referred to as Poll-DTM from one anchor device (serving as the initiator) may contain instructions for ranging slot assignments of the other anchors (serving as the receivers). After receiving the polling message each receiver anchor will transmit a reply messages, also referred to as a Response DTM during its assigned ranging slot in a ranging round. Upon reception of those UWB signals from the anchors (both initiator and receiver), a DT-Tag device may perform a multilateration algorithm to determine its own location based on coordinates of the anchors and time stamps provided in the transmitted UWB signals. A cluster may include any number of anchors. In some instances, common cluster sizes may include 3-10 anchors.

During DL-TDoA, messages may be structured as SP1 data frames. SP1 data frames comprise a number of fields, including SYNC, SFD, STS, PHR and PHY Payload. SYNC is a preamble that synchronizes the sender and receiver. Start-of-Frame Delimiter (SFD) marks the end of the SYNC preamble. Scrambled Time Sequence (STS) is a more secure preamble. PHY Header (PHR) includes information about the PHY Payload. PHY Payload includes data packet comprising the message, e.g., locations of the anchor responder and/or various timestamps. Various fields of the data frame may be encrypted. For example, both the STS and at least portions of the PHY Payload, including locations of the anchors and relevant times, may be encrypted. Furthermore, PHY Payload may include different types of MAC Header (MHR), which may contain different information.

There may be a number of different configurations for generating the STS. In some aspects, Static STS refer to a mode of STS generation in which corresponding ranging slot in ranging rounds will have the same STS index, referred to as cryptoStsIndex. For example, the cryptoStsIndex of the first ranging slot is the same in each ranging round, the cryptoStsIndex of second ranging slot is the same in each ranging round, etc. In some instances, the cryptoStsIndex will range through a number of indices equal to the number of anchors, i.e., max_cryptoStsIndex. For example, the DT-Anchor initiator may use index 0 for its message and each DT-Anchor will use indices 1,2,..., up to the number of anchor responders, i.e., max_cryptoStsIndex - 1. The index value used by each DT-Anchor responder may be determined by an order specified in the DT-Anchor initiator message or by an out-of-band communication before a ranging round begins.

Successful encryption and decryption in a Static STS environment of the STS and PHY Payload utilises a few pieces of information, including ConfigDigest, StaticSTS IV, Vendor ID, cryptoStsIndex and Nonce. The Config Digest, StaticSTS IV, VendorID may be provided out-of-band (e.g., Bluetooth, WiFi, etc.). In addition, a Source Address should be known, which comprises part of the Nonce for encrypting and decrypting the PHY Payload. The Source Address may be exchanged between counterparties, such that the receiver would know the Source Address of the sender. In some instances, the "Source Address" is distributed out-of-band because a MAC Header (MHR) type "Data" used for FiRa TWR UWB frames, per IEEE 802.15.4, can only have a "Destination Address" in the address fields. However, in the DL-TDoA scheme, knowing the Source Address in advance is impossible. Therefore, in some instances, the MAC Header (MHR) type for TDoA frames may be changed to "Multipurpose," which allows openly sending the Source Address, alone or with the Destination Address, or as an implicit broadcast message. The Nonce includes cryptoStsIndex. Thus, knowing the correct cryptoStsIndex enables to successfully decrypt the PHY Payload.

In some instances, in a Static STS environment, cryptoStsIndex cycles from 0 for the polling message to the maximum number of slots in the Ranging Round used by the DL-TDoA cluster. The reception of POLL-DTM triggers the start of a ranging round. In other words, it is triggering the incrementation of cryptoStsIndex in order the system can receive timestamps and other data payloads. The tag device increases a locally stored value of the cryptoStsIndex upon receipt of each transmission from an anchor. For example, after receiving the polling message, the tag device will increase the cryptoStsIndex to 1; after receiving the first ranging response message from a receiver anchor, the tag device will increase the crytpoStsIndex to 2; etc.

In some instances, reception recovery after missed DL-TDoA message(s), as described herein, involves systematically finding the correct Nonce, which is an input for encryption/decryption of the PHY Payload in the FiRa Static STS scheme.

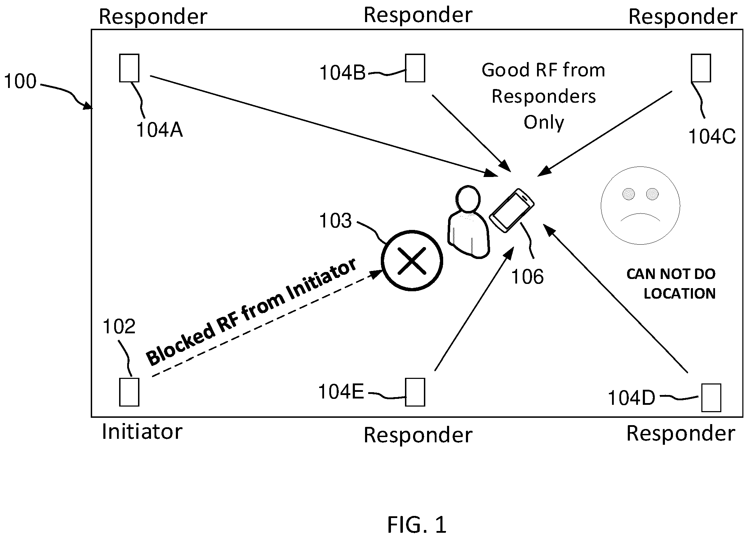

FIG. 1 illustrates an example real time location system 100. Positioning system 100 may include a number of devices, including an initiator 102, responders 104A-E, and a target device 106. Using a plurality of messages transmitted between the initiator, responders, and target device, a target device 106 may be determine its position based on the timing of the messages and data contained therein. For example, the position may be determined based on the time stamps associated with the plurality of messages and/or the known locations of the initiator 102 and responders 104A-E. The initiator 102, responders 104A-E, and target device 106 may be referred to in multiple ways. For example, the initiator 102 may be referred to as DT-Anchor initiator, responders 104A-E may be referred to as DT-Anchor responders, target device 106 may be referred to as DT-Tag.

As depicted in FIG. 1, the signal path from the initiator 102 to the target device 106 may blocked by an obstacle 103. Thus, in the depicted configurations, the target device will not receive messages from the initiator 102. In some instances, obstacle 103 may be a human body, wall, or other objects present in the straight-line path between the initiator 102 and the target device 106. The message from DT-Anchor may still be received at the responders 104A-E. In real reception environments, there is a relatively high probabilities that the target device may not receive the polling message. Thus, DT-Tag would stay in "waiting" of the POLL-DTM condition and would not receive correctly subsequent REPLY-DTMs, which from RF perspective could be perfectly received.

While a message from the initiator 102 may not be received at the target device 106, each of the responders 104A-E may receive the message and transmit a message in response. Those messages by the responders may be successfully received by the physical hardware of the target device 106, but they will not be successfully decrypted by the target device 106.

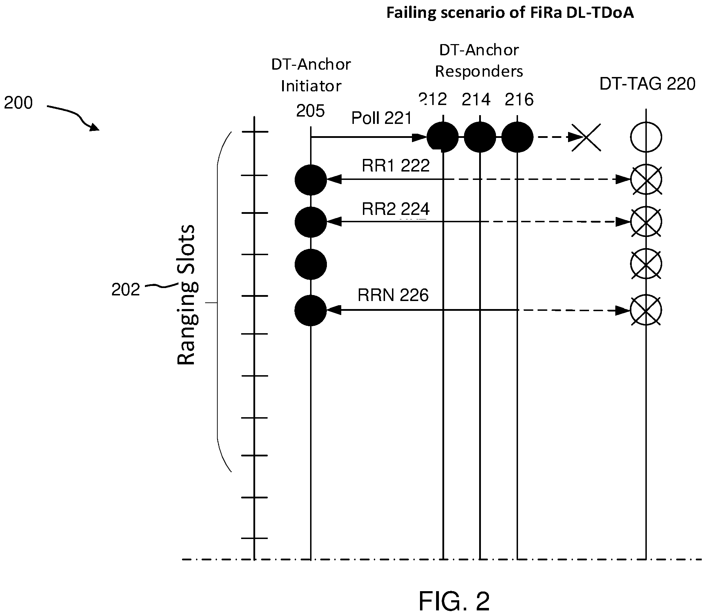

FIG. 2 is a signaling diagram depicting a failure scenario in FiRa DL-TDoA, according to some aspects of the present disclosure. Messaging in a RTLS may be structured according to DL-TDoA ranging round. For example, anchor initiators and anchor responders may transmit and receive messages using two-way ranging (TWR). The tag device may also receive the messages exchanged between the initiator and responder anchors. In a ranging round for DL-TDoA, each anchor responder may be assigned to transmit a message in one of the ranging slots 202 by the polling message 221. As described above, obstacles in the physical world may result in DT-Tag 220 not receiving a message transmitted by a DT-anchor initiator 205. Figure 2 includes the transmission of messages between a DT-Anchor initiator 205, first DT-Anchor responder 212, second DT-Anchor responder 214, N^{th} DT-Anchor responder 216, and DT-Tag 220.

At the start of ranging, initiator 205 transmits a polling message 221. Poll 221 serves as the ranging initiation message for SS-TWR or DS-TWR between the anchor initiator 205 and anchor responders 212, 214, 216. In response to the poll 221, first responder 212 transmits a first ranging response (RR1) 222, second responder 214 transmits a second ranging response (RR2) 224, and N^{th} responder 216 transmits an N^{th} ranging response (RRN) 226. The order of transmission of the ranging responses may be assigned by the anchor initiator and transmitted at part of the data contained in the polling message 221. Alternatively, the order of transmission of the ranging responses may be pre-determined or negotiated out-of-band by the anchors. Each anchor responder may be assigned to transmit a ranging response at one of the ranging slots 202. Each responder can determine when its ranging slot occurs by tracking the time elapsed after receiving the polling message 221. The ranging response messages may include location/coordinates of the respective anchor transmitting the ranging response message. For example, RR2 224 may contains the coordinates of anchor 214.

The ranging initiation message and response messages are comprised by SP1 data frames, meaning each data frame includes a number of fields, e.g., SYNC, SFD, STS, PHY, and Data payload. Furthermore, for the TWR used in Fig. 2, Statis STS rotation is used, meaning that decryption of the message requires a correct cryptoSTSindex. The cryptoSTSindex which starts from 0 for the polling message and increments by one for each response message. If a device attempts to decrypt the STSusing the wrong cryptoSTSindex, then the device will report an error for the received frame comprising the message. Because the cryptoSTSindex varies for each ranging slot, so does the STS generated based on the cryptoSTSindex.

As shown in Fig. 2, DT-Tag 220 fails to receive the polling message 221. For the sake of explanation, Fig. 2 assumes DT-Tag 220 does receive the first ranging response 222. DT-Tag 220 will attempt decrypt the first ranging response 222 using cryptoSTSindex=0, because the first ranging response 222 is the first message received in the ranging round. However, the first ranging response 222 will have been encrypted using cryptoSTSindex=1. Thus, DT-Tag 220 will report an error when it attempts to decrypt first ranging message 222 using cryptoSTSindex=0. Similarly, second ranging response 224 is encrypted with cryptoSTSindex=2. Even if DT-Tag 220 receives second ranging response 224, it will attempt to decrypt the message with the wrong cryptoSTSindex. This failure to decrypt because of the use of the wrong cryptoSTSindex will continue for all ranging response messages, up to and including the last ranging response message 226. The failure to receive the polling message and, as a result, the failure to decrypt the ranging response messages 222, 224, 226.

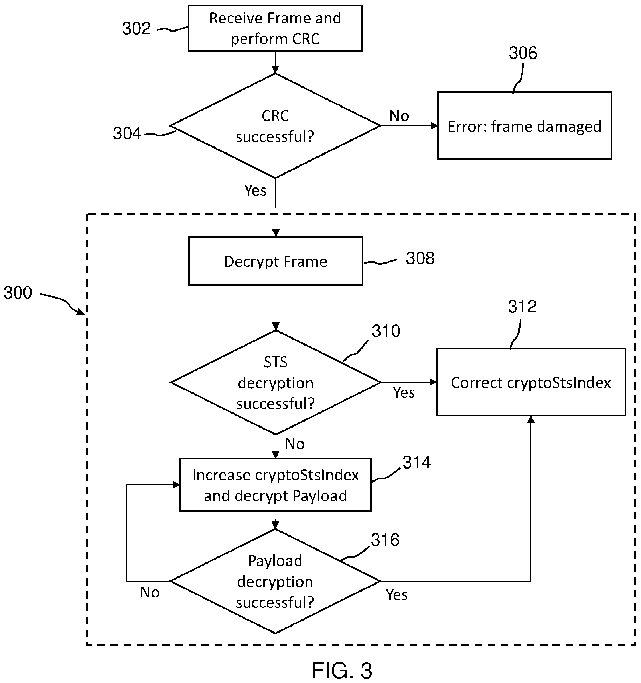

FIG. 3 is a simplified block diagram of a reception recovery method 300, according to some aspects of the present disclosure. In some aspects, reception recovery method may be implemented by a device 500 implementing a reception recovery submodule 531 as described herein. After a frame comprising a message is received at step 302 (e.g., received by a transceiver 515 of the device 500), various processes may occur including a Cyclic Redundancy check (CRC) to determine if there is an error in the data contained in the message. At step 304, the device determines if the CRC returned any errors. At step 306, if the data packet has an error, then processing of the frame may stop and/or other error-correcting processes may begin to restore the data in the frame. If the CRC returns no errors, then the device implements reception recovery method 300.

At step 308, the device attempts to decrypt the frame. As described herein, the cryptoStsIndex is used in the encryption of the STS and therefore knowing this is a prerequisite for successfully decrypting the STS. At step 310, the device determines if STS decryption using the current cryptoStsIndex was successful. At step 312, if STS decryption was successful, then the device is synchronized with the ranging round and is correctly configured to receive further messages. At step 314, if an error is reported by the receiving device (e.g., DT-Tag 220, 420), then the device will increase the cryptoStsIndex (e.g., from 0 to 1) and attempt to decrypt the PHY Payload with the new cryptoStsIndex. The PHY Payload, instead of being discarded after an error is reported from STS decryption, may be stored/saved, allowing further decryption attempt(s). In some aspects, The PHY Payload may be stored in a receiver buffer comprising RAM and located in, for example, device 500 described herein. At step 316, the device determines if the Payload decryption was successful. If the Payload decryption was successful, then reception recovery method goes to step 312: the correct cryptoStsIndex has been discovered and the device is resynchronized with the ranging round. If the Payload decryption was unsuccessful, then the reception recovery method returns to step 314 and further increases the cryptoStsIndex (e.g., from 1 to 2) and attempts to decrypt the Payload with the new cryptoStsIndex. Reception recovery method 300 may continue to increase the cryptoStsIndex and attempt to decrypt the Payload until each of the cryptoStsIndex have been used (the max number different cryptoStsIndex equal to the number of anchors in the cluster).

In some aspects, implementation of the reception recovery method 300 may require hardware capable of decrypting a packet less than the length of a ranging slot (e.g., 1 millisecond) divided by the number of anchor devices. For example, for a ranging slots of length 1 millisecond and 5 anchors, the hardware on the decrypting device would need to be able to decrypt a packet within 200 microseconds. Qorvo QM35 silicon can decrypt a frame in approximately 60 microseconds. In some aspects, the time between receiving a message and decrypting the message at a UWB-enabled device is less than 200 microseconds. In some aspects, implementation of the recovery method 300 may require the hardware capable of storing the PHY Payload even for frames where decryption of STS causes a device to report an error.

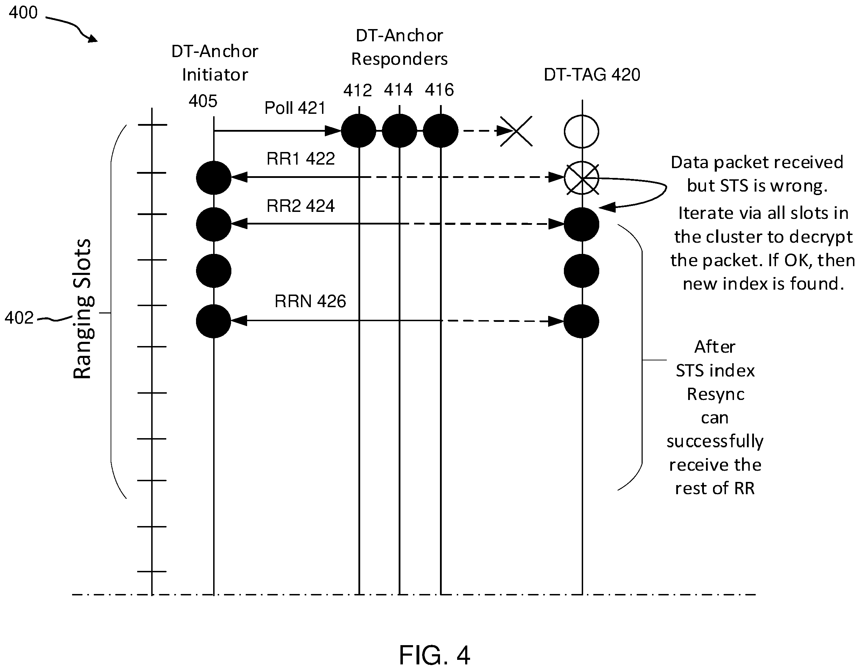

FIG. 4 is a signaling diagram 400 depicting reception recovery in FiRa DL-TDoA, according to some aspects of the present disclosure. Messaging in a RTLS may be structured according to DL-TDoA ranging round. For example, anchor initiators and anchor responders may transmit and receive messages using two-way ranging (TWR). The tag device may also receive the messages exchanged between the initiator and responder anchors. In a ranging round for DL-TDoA, each anchor responder may be assigned to transmit a message in one of the ranging slots 402 by the polling message 421. As described above, obstacles in the physical world may result in DT-Tag 420 not receiving a message transmitted by a DT-anchor initiator 405. Figure 4 includes the transmission of messages between a DT-Anchor initiator 405, first DT-Anchor responder 412, second DT-Anchor responder 414, N^{th} DT-Anchor responder 416, and DT-Tag 220.

At the start of a ranging round, initiator 405 transmits a polling message 421. Poll 421 serves as the ranging initiation message for SS-TWR or DS-TWR between the anchor initiator 405 and anchor responders 412, 414, 416. In response to the poll 421, first responder 412 transmits a first ranging response (RR1) 422, second responder 414 transmits a second ranging response (RR2) 424, and N^{th} responder 416 transmits an N^{th} ranging response (RRN) 426. The order of transmission of the ranging responses may be assigned by the anchor initiator and transmitted at part of the data contained in the polling message 421. Alternatively, the order of transmission of the ranging responses may be pre-determined or negotiated out-of-band by the anchors. Each anchor responder may be assigned to transmit a ranging response at one of the ranging slots 402. Each responder can determine when its ranging slot occurs by tracking the time elapsed after receiving the polling message 421. The ranging response messages may include location/coordinates of the respective anchor transmitting the ranging response message. For example, RR2 424 may contains the coordinates of anchor responder 414.

The ranging initiation message and response messages may comprise by SP1 data frames, meaning each data frame includes a number of fields, e.g., SYNC, SFD, STS, PHY, and Data payload. Furthermore, for the TWR used in Fig. 2, Statis STS rotation is used, meaning that decryption of the message requires a correct cryptoStsIndex. The cryptoStsIndex which starts from 0 for the polling message and increments by one for each response message. If a device attempts to decrypt a message using the wrong cryptoStsIndex, then the decryption will yield noise. Because the cryptoStsIndex varies for each ranging slot, so does the STS generated based on the cryptoStsIndex.

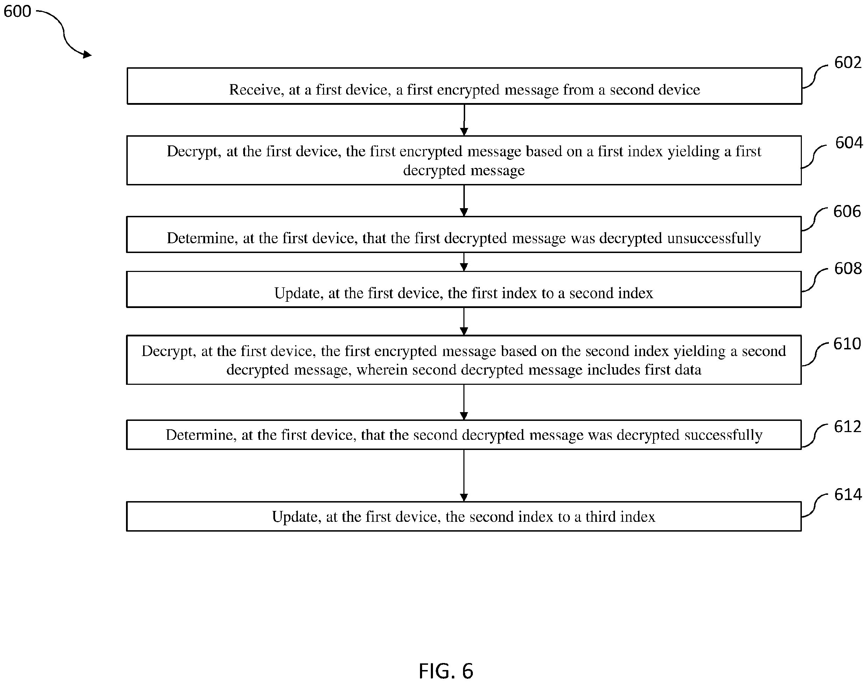

By way of example, Fig. 4 depicts DT-Tag 420 failing to receive the polling message (e.g., due to some obstruction in the vicinity of the tag 420 and/or anchor 405), but receiving the first ranging response 422. DT-Tag 420 will attempt decrypt the first ranging response 422 using cryptoStsIndex=0, because the first ranging response 422 is the first message received by the tag 420 in the ranging round. However, the first ranging response 422 will have been encrypted using cryptoStsIndex=1 since it is actually the second message in the ranging round, i.e., it is in the second ranging slot. Thus, DT-Tag 420 will generate an error based on an incorrect STS when it attempts to decrypt first ranging message 422 using cryptoStsIndex=0. To remedy the failure to decrypt the STS in first ranging message, the DT-Tag 420 can employ the reception recovery method as described herein (e.g., method 300, 600). DT-Tag increments cryptoStsIndex from 0 to 1 and attempts to decrypt the PHY Payload, as described in Figs. 3 and 6. As shown in Fig. 4, the decryption with cryptoStsIndex=1 is successful and DT-Tag 420 will be resynchronized with the ranging round. Figure 4 depicts a scenario where the DT-Tag 420 only fails to receive the initial polling message 421. In some aspects, DT-Tag 420 may fail to physically receive the first 2, 3, 4, or more messages. In such scenarios DT-Tag 420 may need to increment the cryptoStsIndex multiple times to finally successfully decrypt the Payload and resynchronize with the ranging round.

Because the number of slots in a DL-TDoA ranging round is finite, the data can be decrypted by performing multiple attempts, based on the notion of the maximum slots in the ranging round. By decrypting the frame, it is possible to adjust the next reception to the correct slot with correct expected STS configuration. This leads to a improvement in the reception rate of the DL-TDoA in practice.

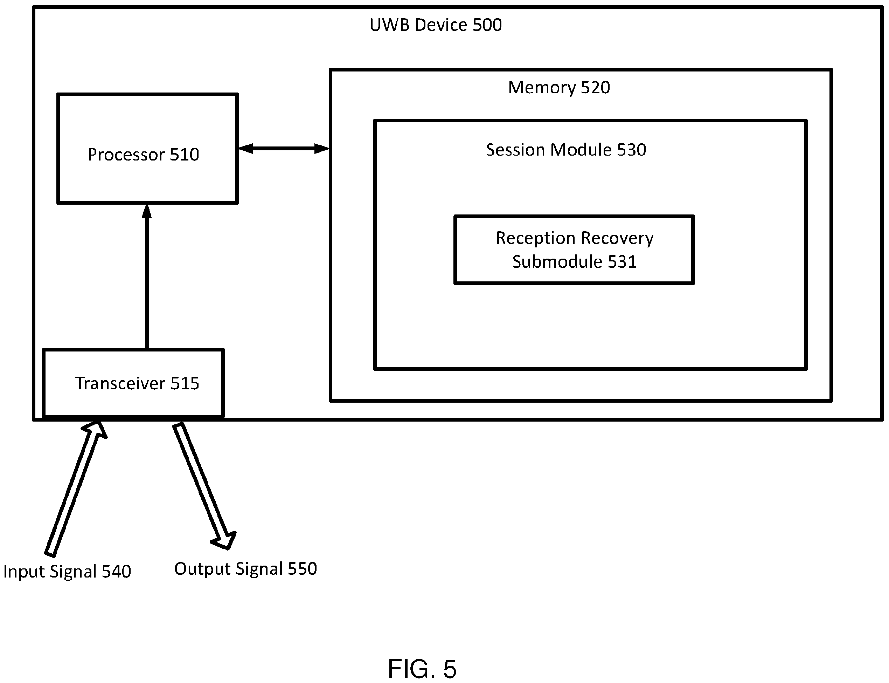

FIG. 5 is a simplified diagram of a communication device 500. One or more UWB devices 500 may be present in the scenarios and sessions depicted in, and described with respect to, FIGS. 1-4, according to one embodiment described herein. As shown in FIG. 5, UWB device 500 includes a processor 510 coupled to memory 520. Operation of UWB device 500 is controlled by processor 510. And although UWB device 500 is shown with only one processor 510, it is understood that processor 510 may be representative of one or more central processing units, multi-core processors, microprocessors, microcontrollers, digital signal processors, field programmable gate arrays (FPGAs), application specific integrated circuits (ASICs), graphics processing units (GPUs) and/or the like in UWB device 500. UWB device 500 may be implemented as a stand-alone subsystem, as a board added to a computing device, and/or partially or wholly as a virtual machine.

Memory 520 may be used to store software executed by UWB device 500 and/or one or more data structures used during operation of UWB device 500. Memory 520 may include one or more types of machine-readable media. Some common forms of machine-readable media may include floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, and/or any other medium from which a processor or computer is adapted to read.

Processor 510 and/or memory 520 may be arranged in any suitable physical arrangement. In some aspects, processor 510 and/or memory 520 may be implemented on a same board, in a same package (e.g., system-in-package), on a same chip (e.g., system-on-chip), and/or the like. In some aspects, processor 510 and/or memory 520 may include distributed, virtualized, and/or containerized computing resources. Consistent with such aspects, processor 510 and/or memory 520 may be located in one or more data centers and/or cloud computing facilities.

In some examples, memory 520 may include machine readable media that includes executable code (e.g. instructions) that when run by one or more processors (e.g., processor 510) may cause the one or more processors to perform the methods described in further detail herein. Such machine-readable media may be described as machine-readable storage media, which can be considered as being non-transitory and tangible. Examples of a machine-readable storage medium may include a CD, a DVD, a storage device, a diskette, a tape, flash memory, physical memory, or any other computer-readable storage medium.

Such executable code may be received for storage in the memory 520 and/or execution by the processor 510 by way of a machine-readable transmission medium, by which instructions may be conveyed. A computer-readable transmission medium may include carrier waves, transmission signals or the like. A computer-readable transmission medium may convey instructions between components of a single computer system and/or between plural separate computer systems.

As shown, for example, memory 520 includes instructions (e.g. executable code) for Session Module 530 that may be used to implement and/or emulate the systems and models, and/or to implement any of the methods described herein. Session Module 530 may receive input signal 540 via the transceiver 515 and generate an output signal 550 which may be a response to the message contained within the input signal 540. Examples of the input signal may include the messages and transmission from a different UWB device than the one depicted in FIG. 5. The input signal may be structured in frames, which, for example, may take the form as described in the FiRa standard. Examples of the output signal may include transmission by the UWB device 500 in response to a received message and transmission of a message that begins a ranging session.

The transceiver 515 may comprise a separate transmitter and receiver or any other means of transmitting in UWB. For example, the UWB device 500 may receive the input signal 540 (such as a ranging message) from another UWB device at the transceiver 515.

In some aspects, the Session Module 530 is configured to control the content and timing of output signal 550. The Session Module 530 may further include reception recovery submodule 531 (e.g., including instructions for iterating cryptoStsIndex, as described herein). Reception recovery submodule 531 may be implemented hardware and/or software.

Some examples of UWB devices, such as UWB device 500 may include non-transitory, tangible, machine readable media that include executable code that when run by one or more processors (e.g., processor 510) may cause the one or more processors to perform the processes of method. Some common forms of machine-readable media that may include the processes of method are, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, and/or any other medium from which a processor or computer is adapted to read.

FIG. 6 illustrates an example method for recovering reception by a UWB-enabled device, according to some aspects of the present disclosure. Method 600 is merely an example, and is not intended to limit the present disclosure beyond what is explicitly recited in the claims. Additional operations can be provided before, during, and after the method 600, and some operations described can be replaced, eliminated, or moved around for additional aspects of FIGS. 1-5. For ease of illustration, FIG. 6 is described in connection with FIGS. 1-5. In some aspects, method 600 may be implemented by a device such as UWB Device 500, as in FIG. 5, or any of the UWB Devices described herein.

At step 602, a first device (e.g., DT-Tag 420) receives a first encrypted message (e.g., first response message 422) from a second device (e.g., DT-Anchor responder 412). In some aspects, the first encrypted message may be an ultra-wideband (UWB) message in the format of an SP1 frame. In some aspects, the first device may be a UWB-enabled tag device. In some aspects, the second device is an UWB-enabled anchor device.

At step 604, the first device decrypts (e.g., step 308 in Fig. 3) the first encrypted message based on a first index (e.g., with cryptoStsIndex=0) yielding a first decrypted message.

At step 606, the first device determines that the first decrypted message was decrypted unsuccessfully (e.g., step 310 or step 316 in Fig. 3).

At step 608, the first device updates (e.g., step 314 in Fig. 3) the first index to a second index (e.g., incrementing cryptoStsIndex from 0 to 1, 1 to 2, ..., or max_cryptoStsIndex - 1 to max_cryptoStsIndex).

At step 610, the first device decrypts (e.g., step 314 in Fig. 3) the first encrypted message based on the second index (e.g., cryptoStsIndex=1, 2, ..., max_cryptoStsIndex) yielding a second decrypted message, wherein the second decrypted message includes first data. In some instances, the first data comprises a first time of transmission of the first encrypted message from the second device and one or more coordinates representing a location of the second device. In some instances, the first index and second index are associated with a first ranging slot and a second ranging slot, where the first ranging slot precedes the second ranging slot in the ranging round, e.g., as shown in the signaling diagrams of Figs. 2 and 4.

At step 612, the first device determines (e.g., step 316 in Fig. 2) that the second decrypted message was decrypted successfully (e.g., step 312).

At step 614, the first device updates the second index to a third index (e.g., incrementing cryptoStsIndex from 1 to 2 in anticipation of second response message 424 which may be encrypted using cryptoStsIndex=2). In some aspects, steps 602-614 occur within 100 microseconds.

In some aspects, a method of reception recovery may include: the first device receiving a second encrypted message from a third device (e.g., second response message 424) after the first encrypted message; the first device decrypts a second encrypted message based on the third index (e.g., cryptoStsIndex=2) yielding a third decrypted message; and/or the first device determining a location of the first device based on the first data and second data. In some instances, third decrypted message includes second data. In some instances, the second data comprises a second time of transmission of the second encrypted message from the third device and one or more coordinates representing a location of the third device.

In some aspects, the first index, second index, and third index are different values of a cryptoStsIndex.

While some of the terms used herein may match or approximate those of a particular standard, such as FiRa, those skilled in the art will recognize their relevance and application to other protocols based on the concept of ranging round (e.g., as defined in the CCC - Car Connectivity Consortium).

Therefore, from one perspective, there have been described methods and devices for recovering reception in untracked positioning. A method includes: receiving a first encrypted message from a second device; decrypting the first encrypted message based on a first index yielding a first decrypted message; determining that the first decrypted message was decrypted unsuccessfully; updating the first index to a second index; decrypting the first encrypted message based on the second index yielding a second decrypted message, wherein second decrypted message includes first data; determining that the second decrypted message was decrypted successfully; and updating the second index to a third index.

Further examples of feature combinations taught by the present disclosure are set out in the following numbered clauses.

Clause 1. method for recovering reception during a ranging round comprising: receiving, at a first device, a first encrypted message from a second device; decrypting, at the first device, the first encrypted message based on a first index yielding a first decrypted message; determining, at the first device, that the first decrypted message was decrypted unsuccessfully; updating, at the first device, the first index to a second index; decrypting, at the first device, the first encrypted message based on the second index yielding a second decrypted message, wherein second decrypted message includes first data; determining, at the first device, that the second decrypted message was decrypted successfully; and updating, at the first device, the second index to a third index.

Clause 2. The method of clause 1, further comprising: receiving, at the first device after the first encrypted message, a second encrypted message from a third device; and decrypting, at the first device, the second encrypted message based on the third index yielding a third decrypted message, wherein the third decrypted message includes second data.

Clause 3. The method of clause 2, wherein the first data comprises a first time of transmission of the first encrypted message from the second device and one or more coordinates representing a location of the second device, and wherein the second data comprises a second time of transmission of the second encrypted message from the third device and one or more coordinates representing a location of the third device.

Clause 4. The method of clause 3, the method further comprising: determining, at the first device, a location of the first device based on the first data and second data.

Clause 5. The method of any of clauses 1 to 4, wherein the first index and second index are associated with a first ranging slot and a second ranging slot, wherein the first ranging slot precedes the second ranging slot in the ranging round.

Clause 6. The method of any of clauses 1 to 5, wherein the first encrypted message is an ultra-wideband (UWB) message, wherein the first device is a UWB-enabled tag device, wherein the first index, second index, and third index are different values of a cryptoStsIndex, and wherein the second device is an UWB-enabled anchor device.

Clause 7. The method of any of clauses 1 to 6, wherein the steps of clause 1 occur within 100 microseconds.

Clause 8. A machine-readable medium comprising instructions that, when executed by one or more processors, cause the one or more processors to perform: receiving a first encrypted message from a device; decrypting the first encrypted message based on a first index yielding a first decrypted message; determining that the first decrypted message was decrypted unsuccessfully; updating the first index to a second index; decrypting the first encrypted message based on the second index yielding a second decrypted message, wherein second decrypted message includes first data; determining that the second decrypted message was decrypted successfully; and updating the second index to a third index.

Clause 9. The machine-readable medium of clause 8, further comprising instructions that, when executed by the one or more processors, cause the one or more processors to perform: receiving, after the first encrypted message, a second encrypted message from a second device; and decrypting the second encrypted message based on the third index yielding a third decrypted message, wherein the third decrypted message includes second data.

Clause 10. The machine-readable medium of clause 9, wherein the first data comprises a first time of transmission of the first encrypted message from the device and one or more coordinates representing a location of the device, and wherein the second data comprises a second time of transmission of the second encrypted message from the second device and one or more coordinates representing a location of the second device.

Clause 11. The machine-readable medium of clause 10, further comprising instructions that, when executed by the one or more processors, cause the one or more processors to perform: determining a location of a third device based on the first data and second data.

Clause 12. The machine-readable medium of any of clauses 8 to 11, wherein the first index and second index are associated with a first ranging slot and a second ranging slot, wherein the first ranging slot precedes the second ranging slot in the ranging round.

Clause 13. The machine-readable medium of any of clauses 8 to 12, wherein the first encrypted message is an ultra-wideband (UWB) message, wherein a third device comprising the machine-readable medium is a UWB-enabled tag device, wherein the first index, second index, and third index are different values of a cryptoStsIndex, and wherein the device is a UWB-enabled anchor device.

Clause 14. The machine-readable medium of any of clauses 8 to 13, wherein the one or more processors are configured to execute the instructions within 100 microseconds.

Clause 15. A device, comprising: a transceiver; a memory storing instructions; and one or more hardware processors configured to execute the instructions to cause the device to perform operations comprising: receiving a first encrypted message from a second device; decrypting the first encrypted message based on a first index yielding a first decrypted message; determining that the first decrypted message was decrypted unsuccessfully; updating the first index to a second index; decrypting the first encrypted message based on the second index yielding a second decrypted message, wherein second decrypted message includes first data; determining that the second decrypted message was decrypted successfully; and updating the second index to a third index.

Clause 16. The device of clause 15, wherein the one or more hardware processors are configured to execute the instructions to cause the device to perform operations further comprising: receiving, after the first encrypted message, a second encrypted message from a third device; and decrypting the second encrypted message based on the third index yielding a third decrypted message, wherein the third decrypted message includes second data.

Clause 17. The device of clause 16, wherein the first data comprises a first time of transmission of the first encrypted message from the device and one or more coordinates representing a location of the second device, and wherein the second data comprises a second time of transmission of the second encrypted message from the third device and one or more coordinates representing a location of the third device.

Clause 18. The device of clause 17, wherein the one or more hardware processors are configured to execute the instructions to cause the device to perform operations further comprising: determining a location of the device based on the first data and second data.

Clause 19. The device of any of clauses 15 to 18, wherein the first index and second index are associated with a first ranging slot and a second ranging slot, wherein the first ranging slot precedes the second ranging slot in the ranging round.

Clause 20. The device of any of clauses 15 to 19, wherein the one or more hardware processors are configured to execute the instructions within 100 microseconds.

Those skilled in the art will recognize improvements and modifications to aspects of the present disclosure. All such improvements and modifications are considered within the scope of the concepts disclosed herein and the claims that follow.

## Claims

1. A method for recovering reception during a ranging round comprising:
receiving, at a first device, a first encrypted message from a second device;
decrypting, at the first device, the first encrypted message based on a first index yielding a first decrypted message;
determining, at the first device, that the first decrypted message was decrypted unsuccessfully;
updating, at the first device, the first index to a second index;
decrypting, at the first device, the first encrypted message based on the second index yielding a second decrypted message, wherein second decrypted message includes first data;
determining, at the first device, that the second decrypted message was decrypted successfully; and
updating, at the first device, the second index to a third index.

2. The method of claim 1, further comprising:
receiving, at the first device after the first encrypted message, a second encrypted message from a third device; and
decrypting, at the first device, the second encrypted message based on the third index yielding a third decrypted message, wherein the third decrypted message includes second data.

3. The method of claim 2,
wherein the first data comprises a first time of transmission of the first encrypted message from the second device and one or more coordinates representing a location of the second device, and
wherein the second data comprises a second time of transmission of the second encrypted message from the third device and one or more coordinates representing a location of the third device.

4. The method of claim 3, the method further comprising:
determining, at the first device, a location of the first device based on the first data and second data.

5. The method of any of claims 1 to 4, wherein the first index and second index are associated with a first ranging slot and a second ranging slot, wherein the first ranging slot precedes the second ranging slot in the ranging round.

6. The method of any of claims 1 to 5,
wherein the first encrypted message is an ultra-wideband, UWB, message,
wherein the first device is a UWB-enabled tag device,
wherein the first index, second index, and third index are different values of a cryptoStsIndex, and
wherein the second device is an UWB-enabled anchor device.

7. The method of any of claims 1 to 6, wherein the steps of claim 1 occur within 100 microseconds.

8. A machine-readable medium comprising instructions that, when executed by one or more processors, cause the one or more processors of a first device to perform the method of any of claims 1 to 7.

9. A device configured to perform operations comprising:
receiving a first encrypted message from a second device;
decrypting the first encrypted message based on a first index yielding a first decrypted message;
determining that the first decrypted message was decrypted unsuccessfully;
updating the first index to a second index;
decrypting the first encrypted message based on the second index yielding a second decrypted message, wherein second decrypted message includes first data;
determining that the second decrypted message was decrypted successfully; and
updating the second index to a third index.

10. The device of claim 9, configured to perform operations further comprising:
receiving, after the first encrypted message, a second encrypted message from a third device; and
decrypting the second encrypted message based on the third index yielding a third decrypted message, wherein the third decrypted message includes second data.

11. The device of claim 10,
wherein the first data comprises a first time of transmission of the first encrypted message from the device and one or more coordinates representing a location of the second device, and
wherein the second data comprises a second time of transmission of the second encrypted message from the third device and one or more coordinates representing a location of the third device.

12. The device of claim 12, configured to perform operations further comprising:
determining a location of the device based on the first data and second data.

13. The device of any of claims 9 to 12, wherein the first index and second index are associated with a first ranging slot and a second ranging slot, wherein the first ranging slot precedes the second ranging slot in the ranging round.

14. The device of any of claims 9 to 13;
wherein the first encrypted message is an ultra-wideband, UWB, message,
wherein the first device is a UWB-enabled tag device,
wherein the first index, second index, and third index are different values of a cryptoStsIndex, and
wherein the second device is an UWB-enabled anchor device.

15. The device of any of claims 9 to 14, wherein the one or more hardware processors are configured to execute the instructions within 100 microseconds.
